# EUROPEAN PATENT SPECIFICATION

(11) **EP 2 910 329 B1**
(45) Date of publication and mention of the grant of the patent: **02.05.2018**
(21) Application number: 15155807.9
(22) Date of filing: 19.02.2015
(51) Int. Cl.: B23K 26/14, B23K 26/00, B23K 26/06, B23K 26/10, G21C 17/017, G21C 19/36

(54) **Laser processing apparatus and laser processing method**
Laserverarbeitungsvorrichtung und Laserverarbeitungsverfahren
Appareil de traitement laser et procédé de traitement au laser

(30) Priority: 20.02.2014 JP 2014030859
(43) Date of publication of application: 26.08.2015
(73) Proprietor: Kabushiki Kaisha Toshiba, Tokyo 105-8001 (JP)
(72) Inventor: Nomura, Kota, Tokyo, 105-8001 (JP); Sano, Yuji, Tokyo, 105-8001 (JP); Chida, Itaru, Tokyo, 105-8001 (JP); Shiihara, Katsunori, Tokyo, 105-8001 (JP); Ichikawa, Hiroya, Tokyo, 105-8001 (JP)
(74) Representative: Moreland, David

(56) References cited:
- JP-A- H 081 361
- JP-A- 2011 088 799
- US-A- 5 742 028
- US-B1- 6 713 716

## Description

### FIELD

Embodiments of the present invention relate to a laser processing apparatus and a laser processing method.

### BACKGROUND

In an atomic power plant, various maintenance methods of placing an automatic instrument in a reactor to get access to devices in the reactor are performed at regular inspection. Among them, a laser processing method and apparatus capable of effectively preventing occurrence of SCC (Stress Corrosion Cracking) have been developed as countermeasures against the SCC resulting from the tensile stress remaining at a welded portion.

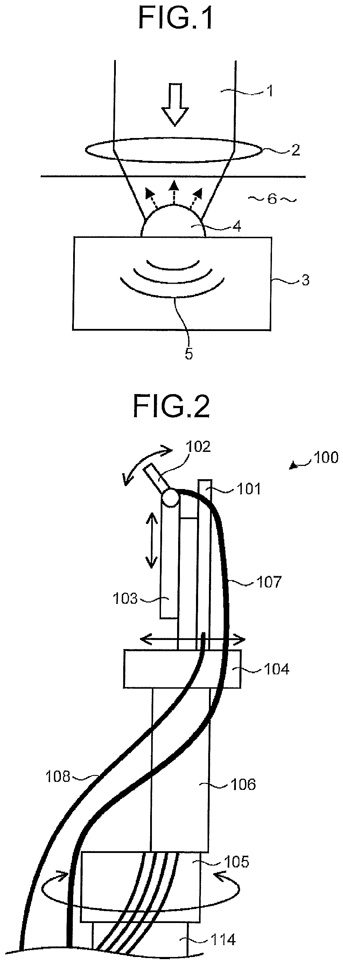

Fig. 1 is a conceptual view illustrating a principle of the laser processing. When a laser beam 1 having a pulse width of about several nanoseconds (ns) is condensed to a spot of a diameter of about 1 mm by a condenser lens 2 and radiated to a member to be treated 3, the surface of the member to be treated 3 absorbs energy to form into plasma. In the case where the periphery of plasma 4 is covered with liquid 6 having a transparency with respect to the wavelength of the laser beam 1, expansion of the plasma 4 is hindered so that internal pressure of the plasma 4 reaches several gigapascals (GPa) and makes an impact on the member to be treated 3. In this event, a strong shock wave 5 occurs and propagates in the member to be treated 3 to cause plastic deformation and change the residual stress into a compressed state.

The above-described laser processing has an effect that less depends on a material strength and extends down to the inside of a plate thickness of about 1 mm from the surface of the member to be treated, as compared with another peening technique such as a shot peening, a water-jet peening or the like. Further, the laser processing provides excellent processability at a confined portion because there is no reaction force during processing and its processing apparatus can be easily downsized.

In the case of applying the laser processing to a reactor core internal structure of a nuclear reactor, when the member to be treated is located in liquid, laser light can be directly radiated thereto. However, for example, in the case of radiating the laser light to an inner surface of a removed upper cover of a pressurized water reactor pressure vessel, it is necessary to perform processing on the member to be treated existing in an air environment. A method and an apparatus are under development which radiate the laser light to the member to be treated placed in the air environment while supplying liquid and extending a liquid film so as to effectively perform laser processing thereon.

JP2011088799 describes a laser machining device for machining a thin film formed on a transparent substrate which includes: a holding part for holding the transparent substrate; a laser optical system for irradiation of the transparent substrate with a laser beam from the upper surface side; a nozzle for spraying liquid on an area to be irradiated with the laser beam from the lower surface side of the transparent substrate.

US 6,713,716 describes a laser unit including a laser beam source for generating a laser beam along a laser beam centerline. A beam tube surrounds at least a portion of the beam centerline. A beam aperture is located at an exit of the tube. A final beam optical lens is mounted within the tube upstream of the aperture. A gas purging means flows purge gas into the tube between the lens and the aperture.

### BRIEF DESCRIPTION OF THE DRAWINGS

Fig. 1 is a conceptual view illustrating a principle of laser processing.
Fig. 2 is a view illustrating a schematic configuration of a laser processing apparatus.
Fig. 3 is a view illustrating a schematic configuration of an essential part of the laser processing apparatus in Fig. 2.
Fig. 4 is a view illustrating a schematic configuration of the whole of the laser processing apparatus in Fig. 2.
Fig. 5 is a view illustrating a schematic configuration of the whole of a laser processing apparatus.
Fig. 6 is a view illustrating a schematic configuration of an essential part of a laser processing apparatus.
Fig. 7 is a view illustrating a schematic configuration of the whole of the laser processing apparatus in Fig. 6.
Fig. 8 is a view illustrating a schematic configuration of an essential part of the laser processing apparatus in Fig. 6.
Fig. 9 is a view illustrating schematic configurations of an essential part of the laser processing apparatus in Fig. 6.
Fig. 10 is a view illustrating a schematic configuration of an essential part of a modification example of the apparatus shown in Figs. 6 to 9.
Fig. 11 is a view illustrating a schematic configuration of an essential part of a laser processing apparatus.
Fig. 12 is a view illustrating a configuration of another example of an access mechanism.

### DETAILED DESCRIPTION

However, when processing of radiating a laser beam is performed while laying a liquid film in an air environment, the member to be treated is abraded during radiation of the laser beam to produce metal fine particles. At the same time, impact of plasma generated by the radiation of the laser beam and heat generated during the radiation of the laser beam cause a part of the supplied liquid to form into a misty fluid, resulting in release of a misty fluid containing metal fine particles into the air environment.

In this case, if the member to be treated is a radioactive substance, diffusion of the misty fluid not only increases the radiation dose in the air environment but also contaminates the apparatus used for processing and a shield wall surface, and therefore a decontamination work is possibly required. Even if the member to be treated is not a radioactive substance, it is not preferable that floating metal fine particles adhere to the surroundings or sucked into the human body in some cases.

Embodiments described below have been made to cope with the above problems and an object is to provide a laser processing apparatus and a laser processing method capable of suppressing diffusion of a misty fluid containing metal fine particles produced during processing of an member to be treated placed in an air environment.

A laser processing apparatus according to the present invention is defined in claim 1.

A laser processing method according to the present invention is defined in claim 4.

According to the embodiments, it is possible to suppress diffusion of a misty fluid containing metal fine particles produced during processing of an member to be treated placed in an air environment.

Hereinafter, embodiments will be described referring to the drawings.

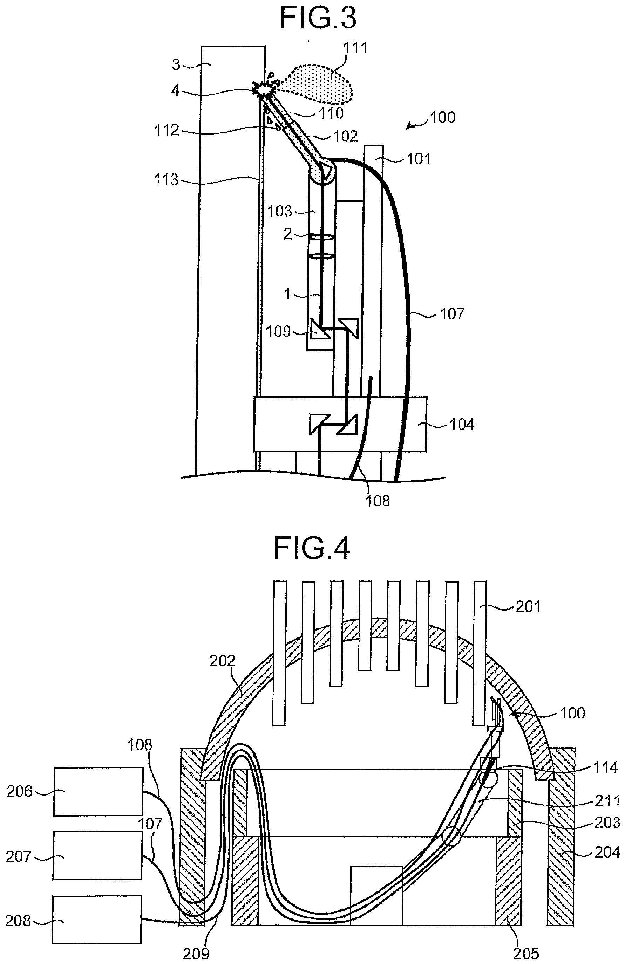

Figs. 2, 3 are views illustrating a schematic configuration of a laser radiation unit 100 in a laser processing apparatus. As illustrated in Fig. 2, the laser radiation unit 100 includes a liquid jetting nozzle 102, and a suction nozzle 101 as a misty fluid collection mechanism is arranged near the liquid jetting nozzle 102.

The liquid jetting nozzle 102 is configured such that its tip can be driven in an inclined direction. The liquid jetting nozzle 102 is configured to be able to perform three-dimensional scanning using three driving systems, that is, a driving device elevating shaft 103 that enables driving in the vertical direction, a driving device horizontal shaft 104 that enables driving in the horizontal direction, and a driving device rotating shaft 105 that enables driving in the rotation direction. On the driving device rotating shaft 105, a laser oscillator 106 is arranged. As illustrated in Fig. 3, inside the driving device horizontal shaft 104 and the driving device elevating shaft 103, an optical transmission system is built in for transmitting a laser beam 1 emitted from the laser oscillator 106 to the liquid jetting nozzle 102. The optical transmission system is composed of an all-reflective mirror 109, a condenser lens 2 installed on an optical path and so on. A part of the all-reflective mirror 109 is configured to be driven with driving of the driving device horizontal shaft 104 and the driving device elevating shaft 103.

The laser beam 1 emitted from the laser oscillator 106 is transmitted while being reflected off the all-reflective mirror 109 and condensed by the condenser lens 2, and reaches the inside of the liquid jetting nozzle 102. On the other hand, the liquid jetting nozzle 102 is supplied with liquid 110 from a liquid supply mechanism 207 (see Fig. 4), and the laser beam 1 is transmitted to the liquid 110 and, according to the present invention, coaxially radiated into a liquid flow of the liquid 110 to be jetted from the tip of the liquid jetting nozzle 102. The laser beam 1 radiated into the liquid 110 is transmitted through the liquid 110 and radiated to a member to be treated 3 having a surface in contact with a liquid film of the liquid 110. This produces plasma 4 on the surface of the member to be treated 3, thereby making it possible to relax the residual stress of the member to be treated 3 on the above-described principle of laser processing.

As for the liquid 110 after the laser processing, a part thereof becomes a finer misty fluid 111 by the plasma 4, another part thereof becomes a liquid drop 112 due to collision with the member to be treated 3, and the remainder becomes a surface flow liquid 113 flowing on the surface of the member to be treated 3. Each of them contains metal fine particles of the member to be treated 3 produced during laser radiation, and the liquid drop 112 and the surface flow liquid 113 are easy to recover because they fall to the vicinity of the member to be treated 3 by the gravity without diffusion in a wide range. On the other hand, the misty fluid 111 comes into a state of floating in the air and therefore may drift in the air and diffuse to an undesired part.

Hence, in the laser processing apparatus in this embodiment, sucking the misty fluid 111 containing metal fine particles through use of the suction nozzle 101 and recovering the sucked misty fluid 111 via a suction mechanism 206 (see Fig. 4), makes it possible to prevent the misty fluid 111 containing metal fine particles from diffusing to an undesired part.

Fig. 4 illustrates the whole configuration of the laser processing apparatus in the case of performing laser processing on a nozzle stub of a nuclear reactor pressure vessel upper cover of a pressurized water reactor. A nuclear reactor pressure vessel upper cover 202 detached from a nuclear reactor pressure vessel is placed in an air environment while being supported by a plurality of support columns 204. Inside the support column 204, a concrete biological shield 205 and a stainless steel shield 203 are installed for radiation protection.

The laser radiation unit 100 of the laser processing apparatus is connected to an access mechanism 211 composed of a robot arm and the like installed inside the concrete biological shield 205 and the stainless steel shield 203, via an access mechanism connection unit 114. The access mechanism 211 allows the laser radiation unit 100 to get access to the vicinity of a nuclear reactor upper cover nozzle stub 201 welded to the nuclear reactor pressure vessel upper cover 202 and perform laser processing on a desired part.

The liquid supply mechanism 207 that supplies the liquid necessary for the laser processing and a laser control mechanism 208 that supplies power to and controls the laser radiation unit 100 are arranged outside the concrete biological shield 205 and the stainless steel shield 203 to allow an operator to get access thereto. The liquid supply mechanism 207 and the laser control mechanism 208 are configured to supply the liquid, signal and so on necessary for the operation and laser processing of the laser radiation unit 100 by means of a liquid supply tube 107, and a cooling liquid circulation mechanism and control signal cable 209, respectively.

The misty fluid 111 recovered from the suction nozzle 101 installed in the laser radiation unit 100 is led to the suction mechanism 206 arranged outside the concrete biological shield 205 and the stainless steel shield 203 via a suction tube 108 and recovered, separated into liquid and metal fine particles by a gas/liquid separation mechanism provided in the suction mechanism 206.

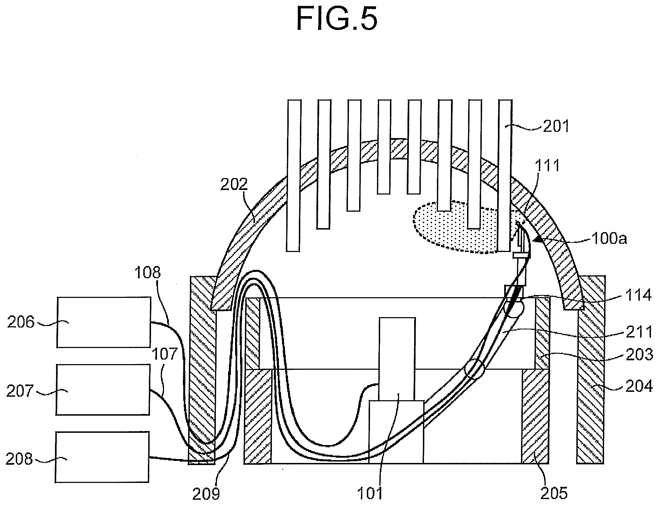

Next, a laser processing apparatus will be described referring to Fig. 5. Note that components in Fig. 5 corresponding to those of the laser processing apparatus described in Figs. 1 to 4 are given the same reference numerals, and repeated description will be omitted.

The apparatus is configured such that the suction nozzle 101 arranged near the liquid jetting nozzle 102 in Figs. 1 to 4 is arranged at the access mechanism 211. Arranging the suction nozzle 101 at the access mechanism 211 enables reduction in weight of a laser radiation unit 100a.

In the present case, the recovery rate of the misty fluid 111 near the laser radiation unit 100a decreases, but it is possible to recover the misty fluid 111 in a space surrounded by the nuclear reactor pressure vessel upper cover 202, the concrete biological shield 205, and the stainless steel shield 203 so as to prevent the misty fluid 111 from diffusing from the inside of the space to the outside.

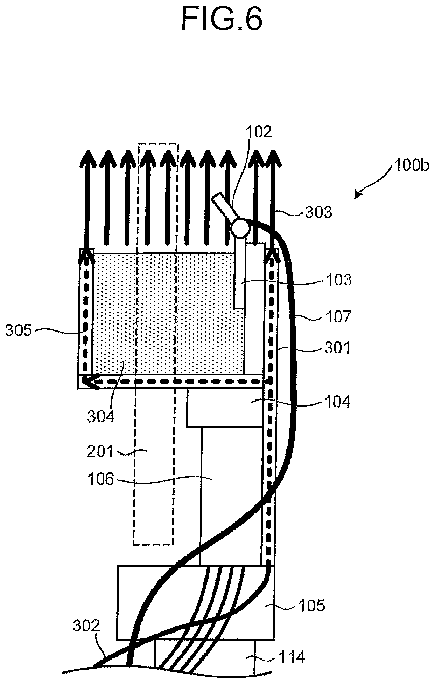

Next a laser processing apparatus according to the present invention will be described referring to Fig. 6 to Fig. 9. Note that components in Figs. 6 to 9 corresponding to those of the laser processing apparatus according to Figs 1 to 4 are given the same reference numerals, and repeated description will be omitted.

According to the present invetnion, a misty fluid collection mechanism provided in a laser radiation unit 100b is composed of a cylindrical gas laminar flow nozzle 301 arranged to surround the liquid jetting nozzle 102, and a misty fluid condensation mechanism 304 arranged on an inner surface of the gas laminar flow nozzle 301. The misty fluid condensation mechanism 304 is configured to condense the misty fluid 111 by cooling it. A detailed configuration of the misty fluid condensation mechanism 304 will be described later.

In Fig. 6, the cylindrical gas laminar flow nozzle 301 has such a shape that the nuclear reactor upper cover nozzle stub 201 that is the member to be treated can pass through the inside of the cylindrical gas laminar flow nozzle 301 and, for example, the gas laminar flow nozzle 301 is formed in a cylindrical shape having no bottom portion or, in an embodiment not according to the present invention but provided for information purposes, a shape having a bottom portion formed with a through hole. Note that in the case where the cylindrical gas laminar flow nozzle 301 has such a configuration that the
nuclear reactor upper cover nozzle stub 201 cannot pass through the inside thereof, for example, in the case where the cylindrical gas laminar flow nozzle 301 is formed in a bottomed cylindrical shape, the gas laminar flow nozzle 301 is configured to have a length enough to cover the whole nuclear reactor upper cover nozzle stub 201.

In the case where the gas laminar flow nozzle 301 is in the cylindrical shape having a bottom portion formed with a through hole, the liquid jetted from the liquid jetting nozzle 102 and fluid obtained by condensing the misty fluid 111 flow down from the through hole. In this case, it is desirable to form a configuration that a tray for receiving the dropping liquid is placed on a floor to recover or the like.

Further, in the case where the gas laminar flow nozzle 301 is formed in the bottomed cylindrical shape (having no through hole through which the nuclear reactor upper cover nozzle stub 201 passes; or in the case where the gas laminar flow nozzle 301 is formed to have a storage to store the liquid), it is desirable to provide a configuration for removing liquid accumulating in the gas laminar flow nozzle 301. Conceivable configurations are, for example, that a hole through which the nuclear reactor upper cover nozzle stub 201 cannot pass is provided as a leak path through which the liquid flows down to the floor, that a tube for recovering the liquid is connected to the gas laminar flow nozzle 301 and a pump is connected to the tube for suction, and so on.

The gas laminar flow nozzle 301 is configured to form a cylindrical air curtain (gas flow) surrounding the nuclear reactor upper cover nozzle stub 201 around its axis direction from its upper end portion to be able to spray (jet) a gas laminar flow 303 to a structure. The sprayed gas laminar flow 303 reaches, in a two-dimensional laminar flow, the nuclear reactor pressure vessel upper cover 202 to blow away the liquid drop 112 and the misty fluid 111 produced during laser processing to the inside of the gas laminar flow nozzle 301 so as to be able to collect them.

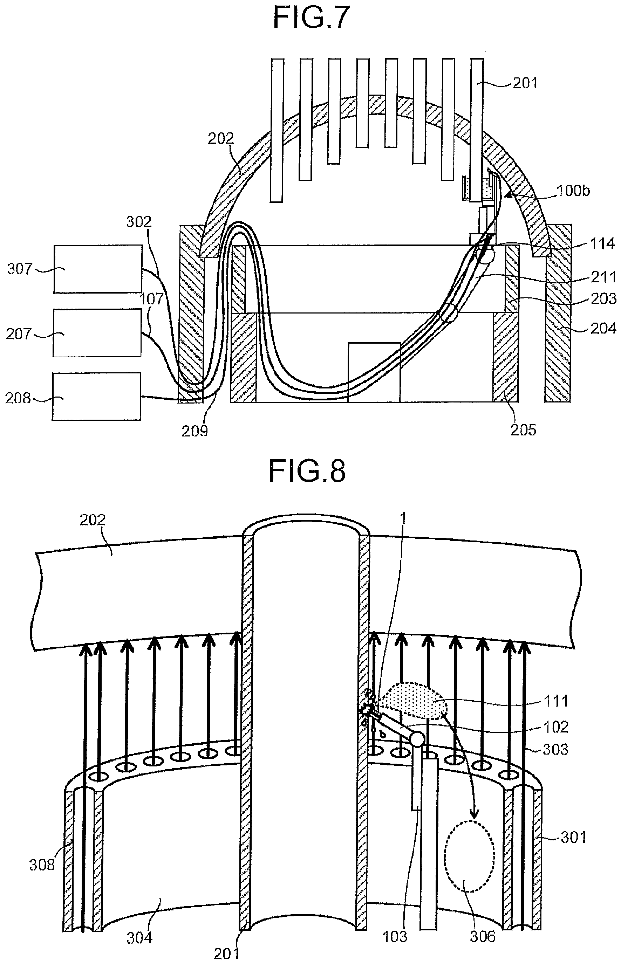

Fig. 7 illustrates a configuration view of the whole apparatus when the laser processing apparatus according to the the invention performs laser processing on the nuclear reactor upper cover nozzle stub 201. Gas constituting the above-described gas laminar flow is supplied via a gas supply tube 302 from a gas supply source 307 arranged outside the concrete biological shield 205 and the stainless steel shield 203. As the gas supply source 307, for example, a compressor or a gas cylinder which can compress gas to a high pressure can be used.

Next, the configuration of the misty fluid condensation mechanism 304 will be described referring to Fig. 8. The misty fluid 111 produced due to radiation of the laser beam 1 floats in a state of having a temperature raised from that of the liquid 110 before processing due to the heat by the radiation of the laser beam 1. The floating misty fluid 111 is collected to the inside of the gas laminar flow nozzle 301 by the gas laminar flow 303 sprayed from the gas laminar flow nozzle 301. The surface of the misty fluid condensation mechanism 304 arranged on the inner surface of the gas laminar flow nozzle 301 has been sufficiently cooled, so that the collected misty fluid 111 is condensed on the surface of the misty fluid condensation mechanism 304 and can be recovered as a liquefied condensed fluid 306 from the air.

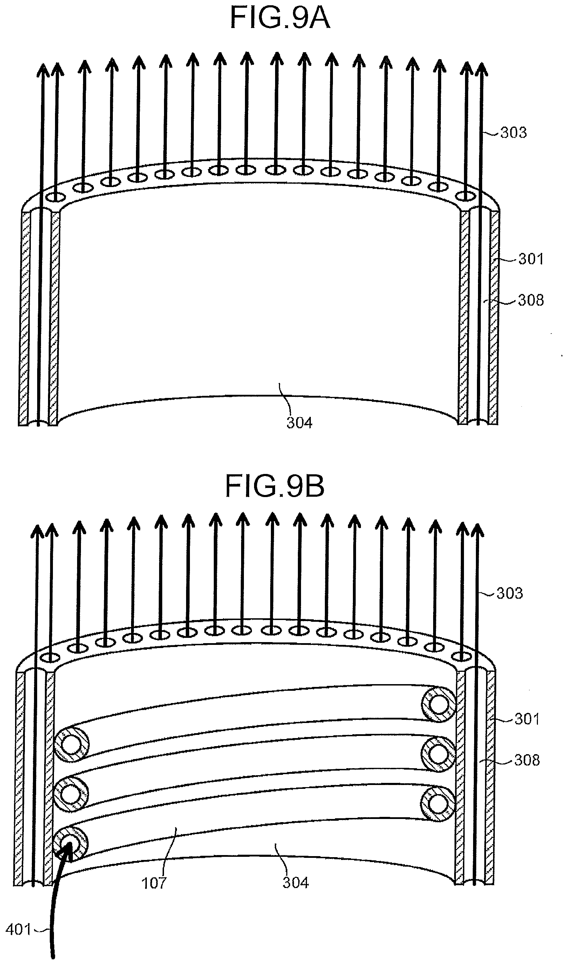

Fig. 9A and Fig. 9B illustrate configuration examples of the misty fluid condensation mechanism 304. As illustrated in Fig. 9A, the gas laminar flow nozzle 301 is provided with many gas supply paths 308 along the vertical direction in order to supply the gas constituting the gas laminar flow 303. Note that the gas supply paths 308 are preferably structured such that the gas inside each gas supply path 308 is divided in pressure, such as a structure that they are branched off from one chamber, or a structure that adjacent gas supply paths 308 are communicated with each other.

When the gas constituting the gas laminar flow 303 in a cooled state passes through the inside of the gas supply paths 308, heat exchange is performed between the gas and the gas laminar flow nozzle 301 to cool the inner surface of the gas laminar flow nozzle 301, thereby making it possible to efficiently condense the misty fluid 111 by the misty fluid condensation mechanism 304.

Further, as illustrated in Fig. 9B, it is also possible to provide the liquid supply tube 107 on the inner surface of the gas laminar flow nozzle 301 as the misty fluid condensation mechanism 304 and allow a cooled liquid 401 to pass through the liquid supply tube 107 so as to cool and condense the misty fluid 111. Note that it is also possible to jet the liquid, passed through the liquid supply tube 107, from the liquid jetting nozzle 102.

As the gas constituting the gas laminar flow 303, various kinds of gas can be used, and air may be used. Further, using nitrogen that is available at low cost and exerts less environmental influence makes it possible to remove humidity on the surface while preventing oxidation of the member to be treated after laser processing, resulting in a better surface state after processing than that in the case of using air. However, to obtain an oxidation preventing effect, the gas constituting the gas laminar flow 303 is not limited to nitrogen, but a gas inactive to the member to be treated can be used and, for example, argon or the like can also be used.

Further, it is also possible to inversely use a gas active to the member to be treated so as to simultaneously perform surface treatment, and if the member to be treated is not the nuclear reactor pressure vessel but an aluminum alloy or the like, a dense oxide film or the like can be formed.

This embodiment has, but not limited to, a configuration that the misty fluid 111 is prevented from flowing out by forming an air curtain and cooled by the misty fluid condensation mechanism 304. For example, to prevent flowing out of the misty fluid 111, a physical cover may be employed, or such a configuration may be employed that condenses the misty fluid 111 by utilizing an ambient temperature and a temperature of the liquid jetted from the liquid jetting nozzle 102 if these temperatures are low enough.

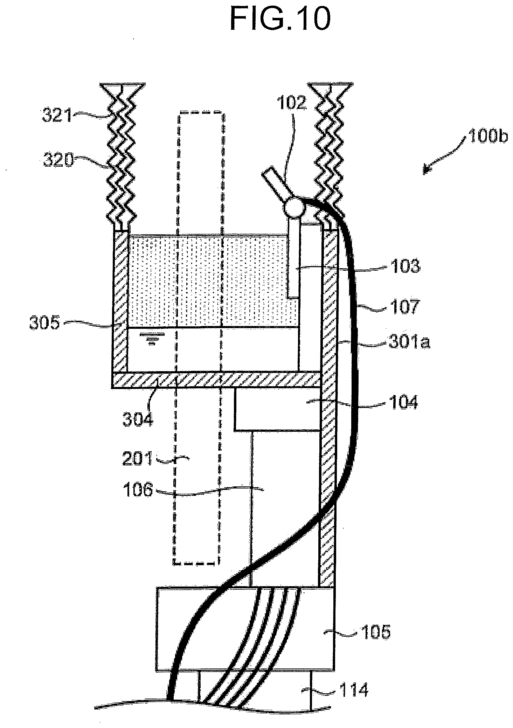

A modification example is illustrated in Fig. 10 which is not according to the invention, but is provided for information purposes. In Fig. 10, a cylindrical member 301a is arranged in place of the gas laminar flow nozzle 301 and, thereon, a bellows 321 as a cover in a cylindrical shape is provided which is urged upward by an elastic body 320 provided therein. The bellows 321 has a length reaching a lower surface of the nuclear reactor pressure vessel upper cover 202, and is pressed from below against the lower surface of the nuclear reactor pressure vessel upper cover 202 and thereby can separate the inside and the outside. It is simply necessary to prevent the misty fluid 111 from flowing outside, and therefore an upper part of the bellows 321 simply needs to be in contact with the lower surface of the nuclear reactor pressure vessel upper cover 202 but does not need to be strongly pressed against thereto. Further, the upper surface of the bellows 321 is configured to have elasticity in a circumferential direction of the bellows 321 and thereby can come into good contact with the lower surface of the nuclear reactor pressure vessel upper cover 202 even at a position where the lower surface of the nuclear reactor pressure vessel upper cover 202 has a large curvature. Alternatively, instead of using a single bellows 321 in a cylindrical shape, a plurality of bellows in an arc shape arranged side by side to constitute a bellows in a cylindrical shape as a whole can also cope with the lower surface of the nuclear reactor pressure vessel upper cover 202 having a large curvature. Note that in place of the bellows 321 and the elastic body 320, for example, such a configuration may be employed that a balloon is provided and inflated by supply of air to come into contact with the lower surface of the nuclear reactor pressure vessel upper cover 202.

Further, in Fig. 10, example not according to the invention but provided for information purposes, the cylindrical member 301a has a bottom portion formed with a through hole. From the through hole, the liquid jetted from the liquid jetting nozzle 102 flows down as described above, but the cylindrical member 301a is configured to have a storage 305 such that the liquid stays therein during construction. This can be achieved by forming a gap (namely, a leak path for the liquid) between the through hole and the nuclear reactor upper cover nozzle stub 201 sufficiently small in the construction. Such a configuration causes the misty fluid 111 drifting inside the bellows to be condensed by the liquid staying in the storage 305 inside the cylindrical member 301a and then discharged to the outside of the cylindrical member 301a. It is possible to provide the certain effect of preventing diffusion of the misty fluid even in the case that the gas laminar flow nozzle 301 or the cylindrical member 301a is formed in a cylindrical shape having no bottom portion. Namely, in the case that the diffusion of the misty fluid is prevented by the gas laminar flow 303 or the bellows 321, the misty fluid stays around or flows downward. Since the liquid 110 is continuously supplied during the process, the misty fluid flows downward on the surface of the nuclear reactor upper cover nozzle stub 201 and spatters around the surface flow liquid 113. Therefore, the majority of the misty fluid becomes a droplet by combining with the spattering liquid 110 or combining the misty drop with each other, and thereby the droplet falls down on the floor. As a result, the misty fluid is prevented from floating and diffusing as it

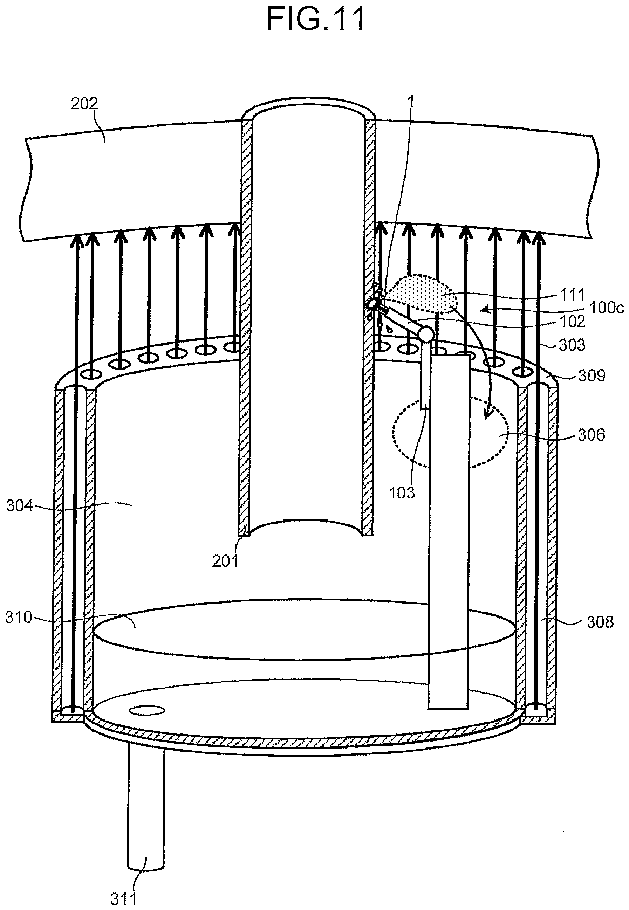

Next, another embodiment of a laser processing apparatus will be described referring to Fig. 11. Note that components in Fig. 11 corresponding to those of the laser processing apparatus according to the present invention shown in figures 6 to 9A-B are given the same reference numerals, and repeated description will be omitted. The fourth embodiment is configured such that a bottomed-circular cylindrical gas laminar flow nozzle 309 capable of storing water therein is arranged, in place of the cylindrical gas laminar flow nozzle 301, in a laser radiation unit 100c.

In the above-described example, the liquid 110 jetted during laser processing and the metal fine particles produced during laser radiation can be recovered as a metal fine particle containing liquid 310 into the gas laminar flow nozzle 309. Further, sucking the metal fine particle containing liquid 310 collected inside the gas laminar flow nozzle 309 via a discharge mechanism 311 composed of a pipe arranged at a bottom part of the gas laminar flow nozzle 309 and the like to thereby discharge it to the outside and separating and collecting the metal fine particles from the liquid, allows the laser processing to be performed without increasing the spatial dose.

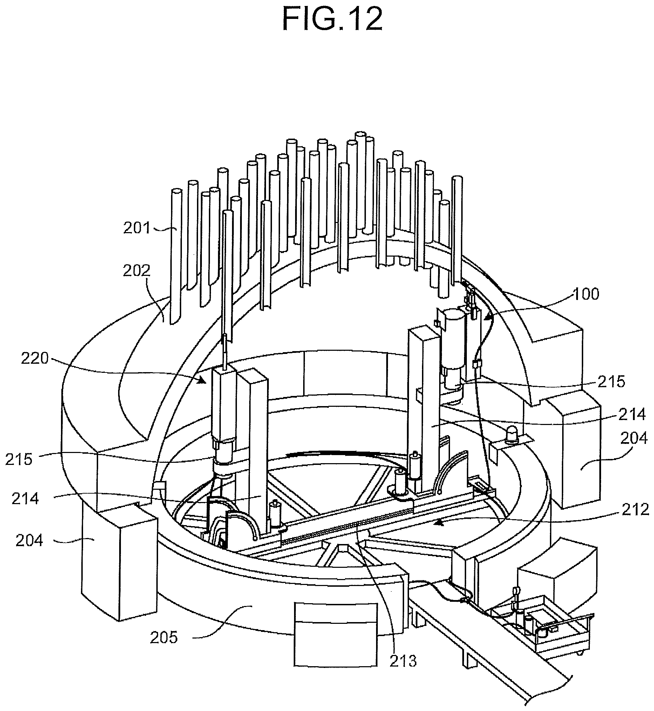

Next, a configuration of another example of the access mechanism will be described referring to Fig. 12. In an access mechanism 212 illustrated in Fig. 12, an elevating shaft 214 movable in the horizontal direction is arranged on a rotary table 213 configured to be rotatable, and the laser radiation unit 100 is connected to the elevating shaft 214 via a rotary shaft 215. Note that on the rotary table 213, the laser radiation unit 100 as a laser radiation mechanism for performing laser processing on the outside of the nuclear reactor upper cover nozzle stub 201 is arranged and, additionally, a laser radiation unit 220 as a laser radiation mechanism for processing the inner surface of the nuclear reactor upper cover nozzle stub 201 is arranged. Here, for example, the rotary table 213 may be formed in a cross shape or the like so that more than one of the laser radiation unit 100 and the laser radiation unit 220 can be operated at the same time.

While certain embodiments have been described, these embodiments have been presented by way of example only, and are not intended to limit the scope of the invention as defined in the appended claims. Indeed, the novel embodiments described herein may be embodied in a variety of other forms. The accompanying claims and their equivalents are intended to cover such forms or modifications as would fall within the scope of the inventions. For example, the cylindrical gas laminar flow nozzle 301 has been described to have a circular cylindrical shape but may have a polygonal cylindrical shape or the like.

## Claims

1. A laser processing apparatus (100) for radiating a laser beam (1) to a member to be treated (3) provided in an air environment to perform surface treatment, the member to be treated forming a structure extending in a vertical direction, the laser processing apparatus (100) comprising:
a liquid supply mechanism (102, 207) configured to supply liquid (110) to a first surface of the member to be treated (3);
and further **characterized by**
a laser radiation mechanism (2, 106, 109) configured to radiate coaxially the laser beam (1) in pulses into the liquid (110) along a flow thereof to the first surface of the member to be treated (3); and
a cylindrical gas laminar flow nozzle (309) disposed below the liquid supply mechanism (102, 207) and configured to jet a gas upward to form a gas flow surrounding the member to be treated (3) around an axis direction thereof.

2. The laser processing apparatus according to claim 1, wherein
the gas laminar flow nozzle (309) is formed as a cylindrical structure having a bottom portion, and
the apparatus further comprising a gas supply mechanism (301) configured to supply a cooled gas (303) into a gas flow path (308) of the gas laminar flow nozzle (309).

3. The laser processing apparatus according to claims 1 or 2, wherein
the member to be treated (3) is at least one of a plurality of nozzle stubs (201), each of the plurality of nozzle stubs (201) being vertically disposed in a pressure vessel upper cover (202) of a pressurized water reactor,
the liquid supply mechanism (102) is a processing head (102) configured to supply the liquid (110) to each of the plurality of nozzle stubs (201).

4. A laser processing method of radiating a laser beam (1) to a member to be treated (3) existing in an air environment to perform surface treatment, the member to be treated forming a structure extending in a vertical direction, the laser processing method comprising:
supplying liquid (110) to a first surface of the member to be treated (3);
and further **characterized by**
coaxially radiating the laser beam (1) in pulses into the liquid (110) along a flow thereof to the first surface of the member to be treated (3); and
jetting a gas upward from lower position than a position of the member to be treated (3) to form a gas flow surrounding the member to be treated (3) around an axis direction thereof.

## Patentansprüche

1. Laserverarbeitungsapparat (100) zum Abstrahlen eines Laserstrahls (1) auf ein zu behandelndes Element (3), bereitgestellt in einer Luftumgebung zur Durchführung von Oberflächenbehandlung, wobei das zu behandelnde Element eine Struktur bildet, welche sich in eine vertikalen Richtung erstreckt, wobei der Laserverarbeitungsapparat (100) Folgendes beinhaltet:
einen Flüssigkeitszufuhrmechanismus (102, 207), konfiguriert zum Zuführen von Flüssigkeit (110) an eine erste Fläche des zu behandelnden Elements (3);
und zudem **gekennzeichnet durch**:
einen Laserabstrahlmechanismus (2, 106, 109), konfiguriert zum koaxialen Abstrahlen des Laserstrahls (1) in Pulsen in die Flüssigkeit (110) entlang einer Strömung hiervon zur ersten Fläche des zu behandelnden Elements (3); und
eine zylindrische Gas-Laminarströmungsdüse (309), angeordnet unterhalb des Flüssigkeitszufuhrmechanismus (102, 207) und konfiguriert zum Ausstoßen eines Gases aufwärts zum Bilden einer Gasströmung, die das zu behandelnde Element (3) um eine Axialrichtung hiervon umgibt.

2. Laserverarbeitungsapparat nach Anspruch 1, bei welchem:
die Gas-Laminarströmungsdüse (309) als eine zylindrische Struktur gebildet ist, welche einen Bodenabschnitt besitzt, und
der Apparat zudem einen Gaszufuhrmechanismus (301) besitzt, konfiguriert zur Zufuhr eines gekühlten Gases (303) in einen Strömungsweg (308) der Gas-Laminarströmungsdüse (309).

3. Laserverarbeitungsapparat nach Anspruch 1 oder 2, bei welchem das zu behandelnde Element (3) mindestens eine einer Vielzahl von Düsenstummeln (201) ist, wobei jede der Vielzahl von Düsenstummeln (201) vertikal in einer oberen Abdeckung (202) eines Druckgefäßes eines mit Druck beaufschlagten Wasserreaktors angeordnet ist,
wobei der Flüssigkeitszufuhrmechanismus (102) ein Bearbeitungskopf (102) ist, konfiguriert, um die Flüssigkeit (110) einem jeden der Vielzahl von Düsenstummeln (201) zuzuführen.

4. Laserverarbeitungsverfahren des Abstrahlens eines Laserstrahls (1) auf ein zu behandelndes Element (3), welches in einer Luftumgebung zur Durchführung von Oberflächenbehandlung vorliegt, wobei das zu behandelnde Glied eine Struktur bildet, welche sich in eine vertikale Richtung erstreckt, wobei das Laserverarbeitungsverfahren (100) folgende Schritte beinhaltet:
Zuführen von Flüssigkeit (110) an eine erste Fläche des zu behandelndes Elements (3);
und zudem **gekennzeichnet durch**:
koaxiales Abstrahlen des Laserstrahls (1) in Pulsen in die Flüssigkeit (110) entlang einer Strömung hiervon zur ersten Fläche des zu behandelnden Elements (3); und
Ausstoßen eines Gases aufwärts aus einer tieferen Position als der Position des zu behandelnden Elements (3) zum Bilden einer Gasströmung, die das zu behandelnde Element (3) um eine Axialrichtung hiervon umgibt.

## Revendications

1. Appareil de traitement laser (100) pour irradier un faisceau laser (1) sur un élément qui doit être traité (3) et qui est positionné dans un environnement constitué par de l'air afin de réaliser un traitement de surface, l'élément qui doit être traité formant une structure qui s'étend dans une direction verticale, l'appareil de traitement laser (100) comprenant :
un mécanisme d'alimentation en liquide (102, 207) qui est configuré de manière à ce qu'il alimente un liquide (110) sur une première surface de l'élément qui doit être traité (3) ; et étant en outre **caractérisé par** :
un mécanisme de rayonnement laser (2, 106, 109) qui est configuré de manière à ce qu'il irradie de façon coaxiale le faisceau laser (1) selon des impulsions à l'intérieur du liquide (110) suivant un écoulement de celui-ci sur la première surface de l'élément qui doit être traité (3) ; et
une buse à écoulement laminaire de gaz cylindrique (309) qui est disposée au-dessous du mécanisme d'alimentation en liquide (102, 207) et qui est configurée de manière à ce qu'elle éjecte un gaz vers le haut de manière à former un écoulement de gaz qui entoure l'élément qui doit être traité (3) autour de sa direction d'axe.

2. Appareil de traitement laser selon la revendication 1, dans lequel :
la buse à écoulement laminaire de gaz (309) est formée en tant que structure cylindrique qui comporte une partie de fond ; et
l'appareil comprenant en outre un mécanisme d'alimentation en gaz (301) qui est configuré de manière à ce qu'il alimente un gaz refroidi (303) à l'intérieur d'une voie d'écoulement de gaz (308) de la buse à écoulement laminaire de gaz (309).

3. Appareil de traitement laser selon la revendication 1 ou 2, dans lequel :
l'élément qui doit être traité (3) est au moins une tubulure prise parmi une pluralité de tubulures de buse (201), chacune de la pluralité de tubulures de buse (201) étant disposée verticalement dans un couvercle supérieur de cuve sous pression (202) d'un réacteur à eau pressurisée ;
le mécanisme d'alimentation en liquide (102) est une tête de traitement (102) qui est configurée de manière à ce qu'elle alimente le liquide (110) sur chacune de la pluralité de tubulures de buse (201).

4. Procédé de traitement laser consistant à irradier un faisceau laser (1) sur un élément qui doit être traité (3) et qui est situé dans un environnement qui est constitué par de l'air afin de réaliser un traitement de surface, l'élément qui doit être traité formant une structure qui s'étend dans une direction verticale, le procédé de traitement laser comprenant :
l'alimentation d'un liquide (110) sur une première surface de l'élément qui doit être traité (3) ;
et étant en outre **caractérisé par** :
l'irradiation de façon coaxiale du faisceau laser (1) selon des impulsions à l'intérieur du liquide (110) suivant un écoulement de celui-ci sur la première surface de l'élément qui doit être traité (3) ; et
l'éjection d'un gaz vers le haut depuis une position plus basse qu'une position de l'élément qui doit être traité (3) de manière à former un écoulement de gaz qui entoure l'élément destiné à être traité (3) autour de sa direction d'axe.
